# FASCICULE DE BREVET EUROPEEN

(11) **EP 0 526 339 B1**
(45) Date de publication et mention de la délivrance du brevet: **04.11.1998**
(21) Numéro de dépôt: 92402195.9
(22) Date de dépôt: 30.07.1992
(51) Int. Cl.: C09D 7/00

(54) **Procédé de dénaturation des peintures hydrodiluables et des peintures solvantées**
Verfahren zur Entklebung von sowohl wasserverdünnbaren als auch Lösungsmittel enthaltenden Lacken
Procedure for paint detackification of waterdilutable as well as organic solvent based paints

(30) Priorité: 02.08.1991 FR 9109914
(43) Date de publication de la demande: 03.02.1993
(73) Titulaire: CFPI INDUSTRIES, 92233 Gennevilliers (FR)
(72) Inventeur: Schapira, Joseph, F-75014 Paris (FR); Droniou, Patrick, F-92700 Colombes (FR); Sudour, Michel, F-95270 Luzarches (FR); Lerouge, Véronique née Bouaffre, F-92270 Bois Colombes (FR)
(74) Mandataire: Koch, Gustave

(56) Documents cités:
- BE-A- 679 639
- FR-A- 2 030 922

## Description

L'invention a pour objet un procédé de dénaturation des peintures hydrodiluables et des peintures solvantées, captées dans les cabines de peinture.

Elle vise également la solution de dénaturation mise en oeuvre dans le susdit procédé et le concentré à partir duquel est préparée ladite solution par dilution avec la quantité d'eau nécessaire.

Les peintures ou laques, présentées sous la forme de solutions ou suspensions dans un solvant, sont appliquées industriellement dans la plupart des cas dans un lieu, appelé cabine de peinture, spécialement conçu pour éviter le rejet des surplus dans l'atmosphère, afin de respecter la protection des travailleurs et l'environnement.

L'application des peintures ou laques sur les objets à recouvrir a lieu sous la forme de fines dispersions obtenues à l'aide de buses.

Dans l'industrie automobile, les peintures ou laques sont déposées en couches successives ayant chacune ses caractéristiques propres.

Après une première couche appliquée par trempé sous courant, les couches ultérieures d'apprêt, de laque finale et éventuellement de vernis, sont appliquées au pistolet. Alors que la première couche de par son mode d'application ne pose aucun problème particulier d'excédent, l'application des couches suivantes par pistolet fait qu'une quantité non négligeable de la solution de peinture n'atteint pas le substrat à traiter.

C'est pour cela qu'en pratique, la pulvérisation est réalisée à l'intérieur d'une cabine dont l'air, chargé de gouttelettes de peinture, est aspiré au travers d'un laveur à rideau de liquide, les gouttelettes restant dans le liquide, l'air sortant se trouvant ainsi dépollué.

Le liquide chargé du produit constitutif des gouttelettes de peinture s'écoule dans un bac de collecte ; il est à son tour traité pour séparer la phase peinture, qui est rejetée, de la phase aqueuse, qui est recyclée vers le dispositif de lavage à rideau liquide, ceci dans le cadre de la législation sur les rejets des effluents et pour des raisons d'économie d'exploitation.

Pour permettre la séparation de la phase peinture de l'eau du produit de lavage, il est connu de faire comporter à cette eau des additifs de dénaturation et/ou de floculation/décantation ; par suite d'une réaction physico-chimique de la peinture, celle-ci forme, une fois dénaturée et selon la conception du système de dénaturation,une phase supérieure ou inférieure ou, à la fois, supérieure et inférieure.

La phase supérieure est généralement éliminée par débordement et/ou raclage de la surface et la phase inférieure par soutirage en partie basse du bassin de dénaturation.

En fonction de la conception de l'équipement de traitement, il peut être avantageux de dénaturer la peinture de manière à ne produire qu'une phase supérieure de peinture sur une phase inférieure aqueuse, la phase supérieure de peinture ne nécessitant, pour sa séparation aucun moyen de pompage, mais uniquement un raclage mécanique.

Une dénaturation conduite ainsi peut nécessiter une installation très encombrante et il peut être plus avantageux, en cas de place réduite, d'opérer par décantation d'une phase inférieure de peinture sur une phase supérieure aqueuse. Un pompage peut alors s'avérer nécessaire.

Il est connu d'utiliser comme additifs de dénaturation à ajouter à l'eau de lavage de la peinture, des poudres ou des liquides alcalins corrosifs et dangereux à manipuler.

Ces produits peuvent contenir, outre des produits alcalins, des produits minéraux tels que de la bentonite ou des argiles qui suppriment le pouvoir collant des peintures et favorisent leur dispersion. Alternativement, ils peuvent contenir des sels d'ions trivalents qui favorisent la coagulation des suspensions.

Les compositions connues à base de poudres ou liquides alcalins et de produits minéraux conduisent à des dénaturations satisfaisantes tant qu'il s'agit de peintures traditionnelles, notamment solvantées à haut extrait sec.

Pour tenir compte des contraintes croissantes en rapport avec la limitation des rejets de solvants organiques dans l'atmosphère, il a été mis au point des types nouveaux de peintures dont la composition est différente des peintures traditionnelles.

Il s'agit des peintures hydrodiluables.

Lorsqu'on essaie de dénaturer ces dernières avec des moyens conventionnels, on remarque que seule une faible proportion de la peinture passe en surface alors que la plus grande partie de celle-ci se dilue dans l'eau de lavage, entraînant ainsi une rapide pollution du bain, et donc la nécessité de fréquentes vidanges.

Pour remédier à cet état de chose il a déjà été envisagé d'utiliser des sels métalliques trivalents comme, par exemple, le sulfate d'aluminium avec maintien du pH de la solution de dénaturation à une valeur inférieure à 4 ; les résultats enregistrés dans ces conditions sont acceptables ; or, le maintien d'un pH voisin ou inférieur à 4 est difficilement applicable industriellement, ceci pour des raisons de corrosion notamment dans le cas des cuves de floculation en béton ; et dès que le pH remonte à une valeur voisine de 5, les résultats se détériorent, que ce soit du point de vue de la dénaturation de la peinture que du passage en solution des pigments.

Par le document BE-A-679 639, on connaît un additif pour liquides de lavage destinés à provoquer la coagulation des particules de peintures de finissage ou de peintures de fond contenant une amine ou un mélange d'amines, à savoir de préférence une polyamine, une diamine cycloaliphatique, la triéthanolamine ou la diéthanolamine.

Par le document FR-A-2 030 922, on connaît des compositions de désactivation de peintures contenant un composé azoté organique dont notamment la triéthanolamine et la diéthanolamine.

Tant l'additif selon le susdit premier document que les compositions de désactivation selon le susdit deuxième document sont mis en oeuvre en milieu alcalin.

L'invention a donc pour but surtout de remédier aux inconvénients de l'art antérieur et de fournir un procédé et une solution permettant de dénaturer dans des conditions satisfaisantes les peintures hydrodiluables.

Et la Société Demanderesse a le mérite d'avoir trouvé que de façon surprenante et inattendue, ce but était atteint dès lors que l'on met en oeuvre dans les susdits procédé et solution de dénaturation au moins un agent de dénaturation choisi dans un groupe de molécules aminées particulières dont il va être question ci-après, ces molécules permettant de plus, de façon également surprenante et inattendue, de dénaturer aussi les peintures solvantées.

Il s'ensuit que le procédé conforme à l'invention de dénaturation des peintures hydrodiluables et des peintures solvantées est caractérisé par le fait que l'on traite lesdites peintures par lavage à l'aide d'une phase aqueuse de dénaturation dont le pH est de 4,5 à 7 et préférentiellement de 5 à 6 et qui contient une quantité efficace d'au moins un agent de dénaturation constitué par une molécule aminée de formule 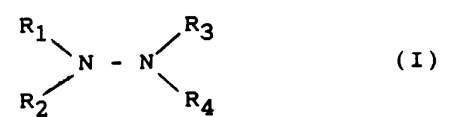 ou de formule: 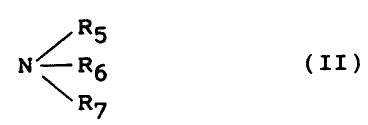 dans laquelle, les substituants R₁ à R₇ qui peuvent être identiques ou différents représentent :
- un atome d'hydrogène,
- un radical de formule -O-Re dans laquelle Re est choisi dans le groupe comprenant l'hydrogène et une chaîne hydrocarbonée aliphatique saturée en C1 à C4 étant entendu que les substituants R5 à R7 ne sont pas simultanément tous des atomes d'hydrogène,
ou par un hydrate ou encore par un sel d'acide organique ou minéral de la susdite molécule aminée, de préférence un sel d'acide sulfurique, phosphorique ou chlorhydrique.

L'invention vise également l'utilisation des molécules aminées de formules (I) et (II) comme agent de dénaturation des peintures hydrodiluables et des peintures solvantées.

Avantageusement, le susdit agent de dénaturation est choisi dans le groupe comprenant notamment l'hydrazine, son hydrate et son chlorure, les alcoxylamines et plus particulièrement l'hydroxylamine, ainsi que leurs sulfate, phosphate et chlorhydrate.

De préférence la concentration de la solution aqueuse de dénaturation en au moins un des agents de dénaturation de formule I ou II ou en au moins l'un de leurs hydrate ou sel d'acide organique ou minéral est comprise entre 0,1 et 50 g/l, de préférence entre 1 et 6 g/l.

Le fait que l'agent de dénaturation conforme à l'invention permet de traiter non seulement des peintures hydrodiluables, mais également des peintures solvantées comme par exemple des laques et des vernis est particulièrement avantageux, étant donné qu'il est très fréquent que différents types de peintures soient recueillis dans une même fosse de dénaturation; par conséquent un agent ne convenant qu'aux seules peintures hydrodiluables pourrait ne pas être utilisable industriellement.

L'invention vise également une solution de dénaturation comprenant une quantité comprise entre 0,1 et 50 g/l, de préférence entre 1 et 6 g/l de l'agent de dénaturation constitué par une molécule aminée de formule (I) ou (II) ainsi que
- des agents dénaturants complémentaires choisis dans le groupe comprenant les polyélectrolytes classiques (non ioniques, anioniques, cationiques) et les solutions de sels de métaux trivalents comme l'aluminium et le fer^{III} et/ou
- des agents antimousse choisis dans le groupe comprenant les huiles d'origine minérale, végétale ou animale, les agents tensio-actifs non ioniques lipophiles dont les alcools ou des alkylphénols contenant de l'oxyde de propylène, les agents antimousses siliconés et/ou
- des agents antimicrobiens choisis dans le groupe comprenant les précurseurs du formol, dont les triazines, les aldéhydes dont le glutaraldéhyde, les dérivés de l'isothiazalone dont les produits commercialisés par la Société RÖHM & HAAS sous la dénomination KATHON.

Elle vise enfin un concentré comprenant une proportion de 5 à 50% en poids d'un agent de formule (I) ou (II) ainsi que
- des agents dénaturants complémentaires choisis dans le groupe comprenant les polyélectrolytes classiques (non ioniques, anioniques, cationiques) et les solutions de sels de métaux trivalents comme l'aluminium et le fer^{III} et/ou
- des agents antimousse choisis dans le groupe comprenant les huiles d'origine minérale, végétale ou animale, les agents tensio-actifs non ioniques lipophiles dont les alcools ou des alkylphénols contenant de l'oxyde de propylène, les agents antimousses siliconés et/ou
- des agents antimicrobiens choisis dans le groupe comprenant les précurseurs du formol, dont les triazines, les aldéhydes dont le glutaraldéhyde, les dérivés de l'isothiazalone dont les produits commercialisés par la Société RÖHM & HAAS sous la dénomination KATHON.

Les agents antimousse sont avantageux car les peintures hydrodiluables génèrent souvent plus de mousse que les peintures solvantées classiques.

Pour amener le pH à la valeur retenue conformément à l'invention, on peut avoir recours, suivant le pH initial de l'agent dénaturant utilisé, à une quantité suffisante d'au moins l'un des produits du groupe comprenant la soude, la potasse, les carbonates de métaux alcalins ou l'ammoniaque, les alcanolamines (en particulier la monoéthanolamine, la diéthanolamine, la triéthanolamine), les phosphates tels que les phosphates trisodique et tripotassique, les pyro- et les tripolyphosphates de sodium et de potassium et les acides sulfurique, chlorhydrique, phosphorique et nitrique.

On peut également régler le pH en utilisant un mélange de deux agents de dénaturation de formule I ou II, l'un est un composé acide et l'autre un composé alcalin ; par exemple on pourra avoir recours à un mélange de sulfate d'hydroxylamine et d'hydrate d'hydrazine.

On peut également régler le pH en utilisant simultanément plusieurs des moyens énumérés ci-dessus.

Les exemples non limitatifs qui suivent illustrent des modes de réalisation avantageux de l'invention pour ce qui est des trois premiers, le quatrième illustrant les résultats obtenus avec des agents de dénaturation selon l'art antérieur.

Dans ces exemples, on a utilisé une installation à rideau d'eau comprenant un bac de 30 litres équipé d'un dispositif d'agitation par circulation réalisée à l'aide d'une pompe. La solution de dénaturation refoulée par cette pompe entre dans une première réserve du bac à partir de laquelle elle s'écoule en lame mince d'environ 5 mm d'épaisseur sur une surface d'environ 30 dm².

Après avoir parcouru la susdite surface la solution de dénaturation passe dans une seconde réserve du bac à travers une série de chicanes alternativement haute, basse et haute ; la phase de peinture dénaturée est ainsi séparée par raclage. La phase aqueuse est ensuite aspirée par la pompe de circulation pour recommencer le cycle. Le débit de la pompe est ajustable. Il a été réglé pour les besoins des essais à environ 300 litres par heure.

L'agent de dénaturation soumis à l'essai est introduit dans la cuve et, après homogénéisation du bain, la peinture est pulvérisée à l'aide d'un pistolet à air comprimé au-dessus de la lame mince de solution de dénaturation formée dans l'installation décrite ci-dessus.

L'agent de dénaturation dégrade la peinture qui vient s'agglomérer sur la première chicane.

La quantité de peinture pulvérisée est en général de 10 g dans chaque essai.

Dans le cas de la séparation de la phase de peinture dénaturée par décantation, l'installation est modifiée par inversion de l'ordre des chicanes, la première étant alors basse, la seconde haute, la troisième basse et ainsi de suite. La peinture dégradée vient alors également s'agglomérer sur la première chicane.

Pour quantifier la qualité de la dénaturation, on utilise un système de notation prenant en compte trois critères.

Le premier critère concerne la qualité de la dénaturation ou "D" qui est notée de 1 à 5 comme suit :
1: Peinture non dénaturée ; pas de modification de son aspect ; passage complet en solution dans le cas des peintures hydrodiluables ; pas de film en surface.
2: Peinture peu dénaturée, collante (dans le cas des peintures solvantées) ; formation d'un film discontinu en surface ne pouvant s'éliminer par raclage.
3: Peinture moyennement dénaturée, peu collante dans le cas des peintures solvantées ; film discontinu en surface pouvant s'éliminer par raclage.
4: Peinture bien dénaturée, non collante sauf en malaxage (dans le cas des peintures solvantées) ; présence d'agglomérats de quelques grains uniquement ; film s'éliminant facilement par raclage.
5: Peinture parfaitement dénaturée, non collante ; film continu, compact, s'éliminant très facilement au raclage.

Le deuxième critère concerne l'exsudation E des pigments (ceci uniquement dans le cas des peintures hydrodiluables, le problème ne se posant pas dans le cas des peintures solvantées) :
1: Passage complet des pigments en solution ; coloration intense et rapide du bain.
2: Passage progressif des pigments en solution ; environ 50% de la peinture reste en surface.
3: Passage en solution très faible ; coloration de l'eau de lavage faible ; légère exsudation des pigments si on dépose les boues sur un papier absorbant.
4: Bain légèrement turbide ; pas d'exsudation des pigments si on dépose les boues recueillies sur un papier absorbant, mais exsudation des pigments au malaxage.
5: Bain parfaitement limpide ; pas d'exsudation des pigments des boues, que ce soit sur papier ou si on les malaxe.

Le troisième critère quantifie le pourcentage de peinture ayant sédimenté ou "S", il est exprimé en %.

Les peintures qui ont été soumises aux essais de dénaturation sont identifées dans le Tableau I ci-après

**TABLEAU I**

| **Nature de la peinture** | **Fournisseur** | **Intitulé** | **Référence** |
|---|---|---|---|
| Hydrodiluable | BASF | Blanc neige Gris futura Rouge 727 | FQ 30029 F FW 957695 n°Code 5191001 |
| | | | |
| Hydrodiluable | HERBERTS | Blanc Gris futura | 711004 712004 |
| | | | |
| Hydrodiluable | IDAC | Blanc neige Gris antique 129 Rouge 727 Rouge andalou | EWT 921 1108 |
| Solvantée | IDAC | Vert véga Vernis | 841 CJ 146 R RK 98531 R |
| | | | |
| Solvantée | PPG | Apprêt gris clair | E 730 G 305/1 |

Les essais sont effectués comme indiqué plus haut et à l'aide de l'installation décrite.

### EXEMPLE 1

Dans une première série d'essais on a testé les trois agents de dénaturation selon l'invention identifiés ci-après :
- l'hydrate d'hydrazine,
- la méthoxylamine en présence de TEA,
- la O-éthyl hydroxylamine en présente de TEA.

Dans le tableau II ci-après on a indiqué la composition et le pH des trois solutions de dénaturation obtenues à partir respectivement de chacun des susdits agents de dénaturation et on a porté pour chaque peinture dénaturée les valeurs de D, E et S (peintures hydrodiluables) ou les valeurs de D et S (pointures solvantées).

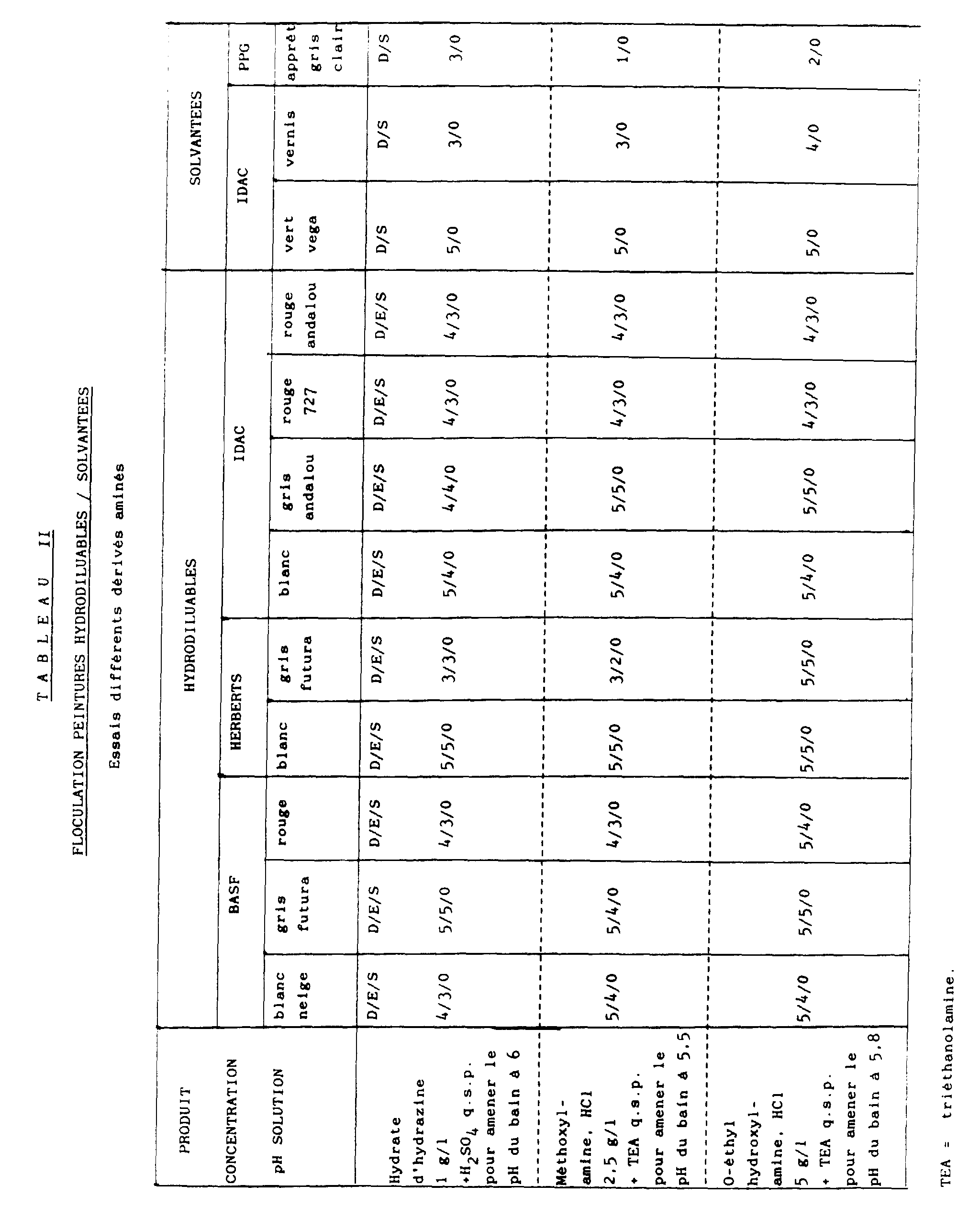

### EXEMPLE 2

Dans une deuxième série d'essais, on a testé les quatre agents de dénaturation selon l'invention suivants :
- sulfate d'hydroxylamine ou HAS,
- sulfate d'hydroxylamine associée à la monoéthanolamine ou MEA,
- sulfate d'hydroxylamine associée à la TEA,
- sulfate d'hydroxylamine associée à l'hydrate d'hydrazine.

Dans le tableau III ci-après on a indiqué la composition et le pH des quatre solutions de dénaturation obtenues à partir respectivement de chacun des susdits agents de dénaturation et on a porté pour chaque peinture dénaturée les valeurs de D, E et S (peintures hydrodiluables) ou les valeurs de D et S (peintures solvantées).

La quatrième solution de dénaturation susdite illustre la possibilité d'amener le pH à la valeur souhaitée par mélange de deux agents de dénaturation conformes à l'invention.

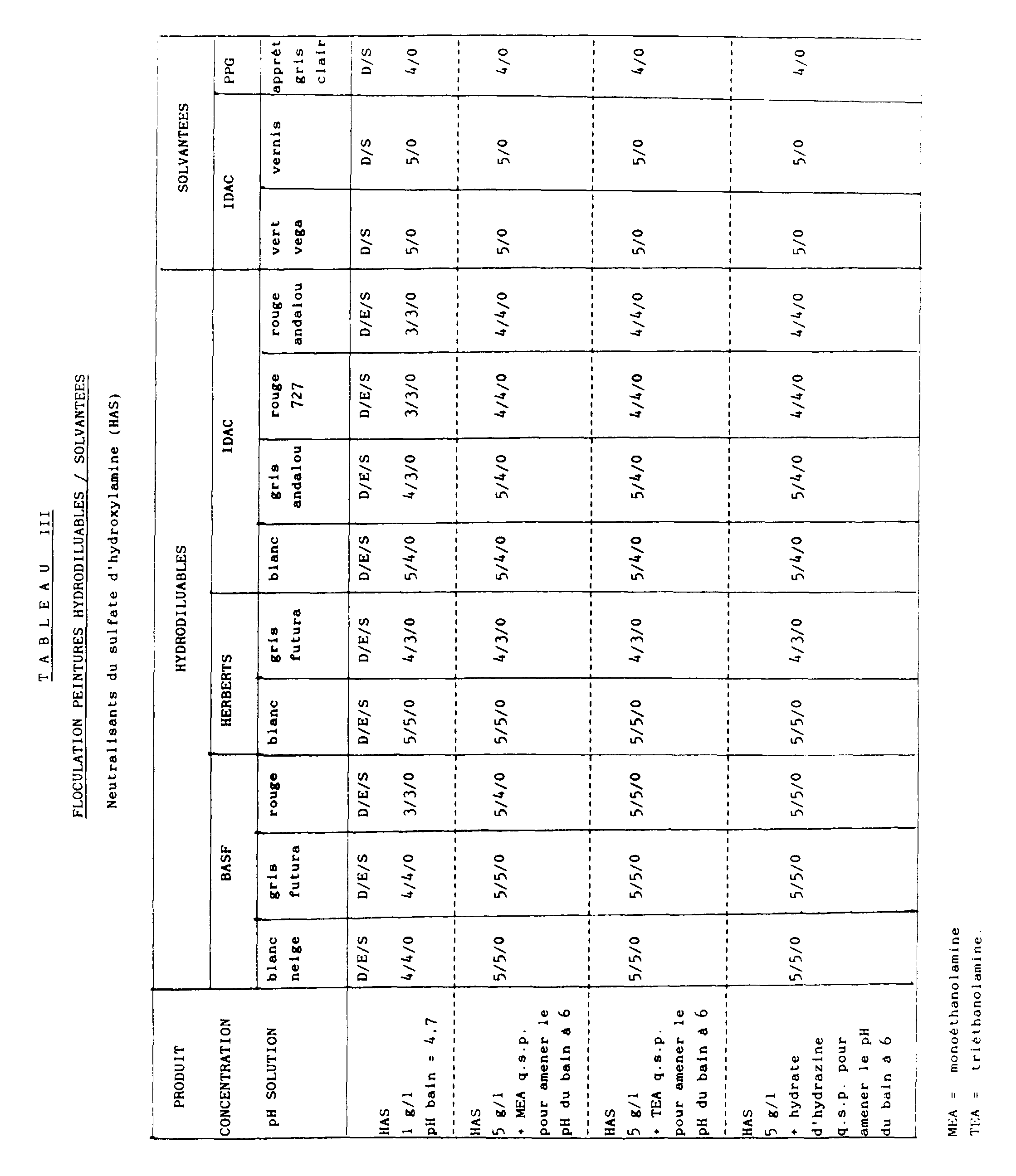

### EXEMPLE 3

Dans une troisième série d'essais on a testé les trois agents de dénaturation conformes à l'invention identifiés ci-après :
- O-sulfonate d'hydroxylamine associée à la TEA,
- phosphate d'hydroxylamine,
- chlorure d'hydroxylamine associée à la TEA.

Dans le tableau IV ci-après on a indiqué la composition et le pH des quatre solutions de dénaturation obtenues à partir respectivement de chacun des susdits agents de dénaturation et on a porté pour chaque peinture dénaturée les valeurs de D, E et S (peintures hydrodiluables) ou les valeurs de D et S (peintures solvantées).

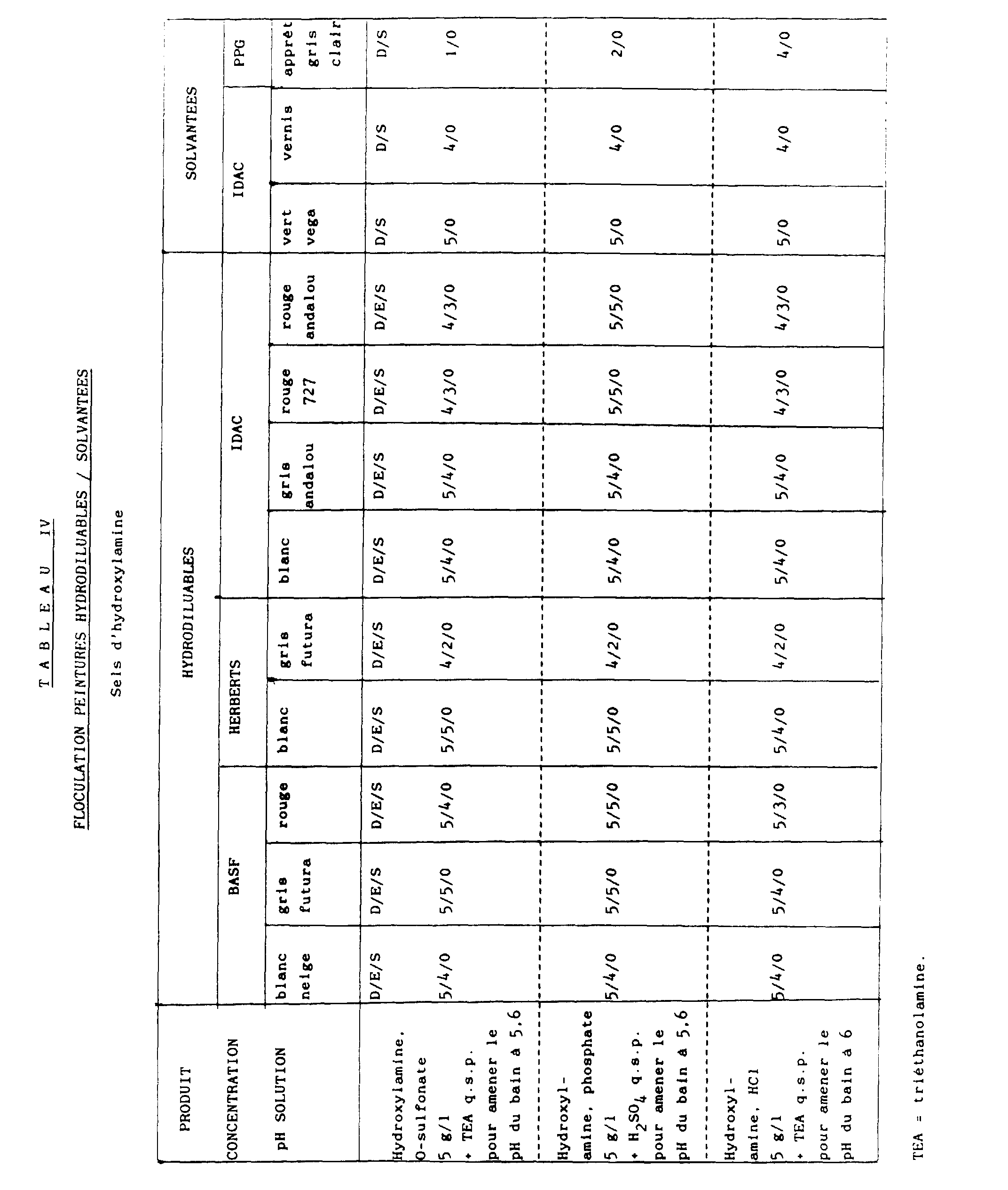

### EXEMPLE 4

Dans une quatrième série d'essais on a testé les trois agents de dénaturation de l'art antérieur identifiés ci-après :
. un produit alcalin commercialisé sous la marque PROGAL P 131 R par la Société Demanderesse, composé essentiellement de potasse,
. un produit à base de sels d'aluminium commercialisé sous la marque PROGAL P 215 R par la Société Demanderesse, composé essentiellement de sulfate d'aluminium et à pH acide,
. une bentonite de marque CLARSOL FGN-FR commercialisée par la Société CECA et titrant essentiellement 60% de SiO₂ et 22% de Al₂O₃.

Dans le tableau V ci-après on a indiqué la composition et le pH des quatre solutions de dénaturation obtenues à partir respectivement de chacun des susdits agents de dénaturation et on a porté pour chaque peinture dénaturée les valeurs de D, E et S (peintures hydrodiluables) ou les valeurs de D et S (peintures solvantées).

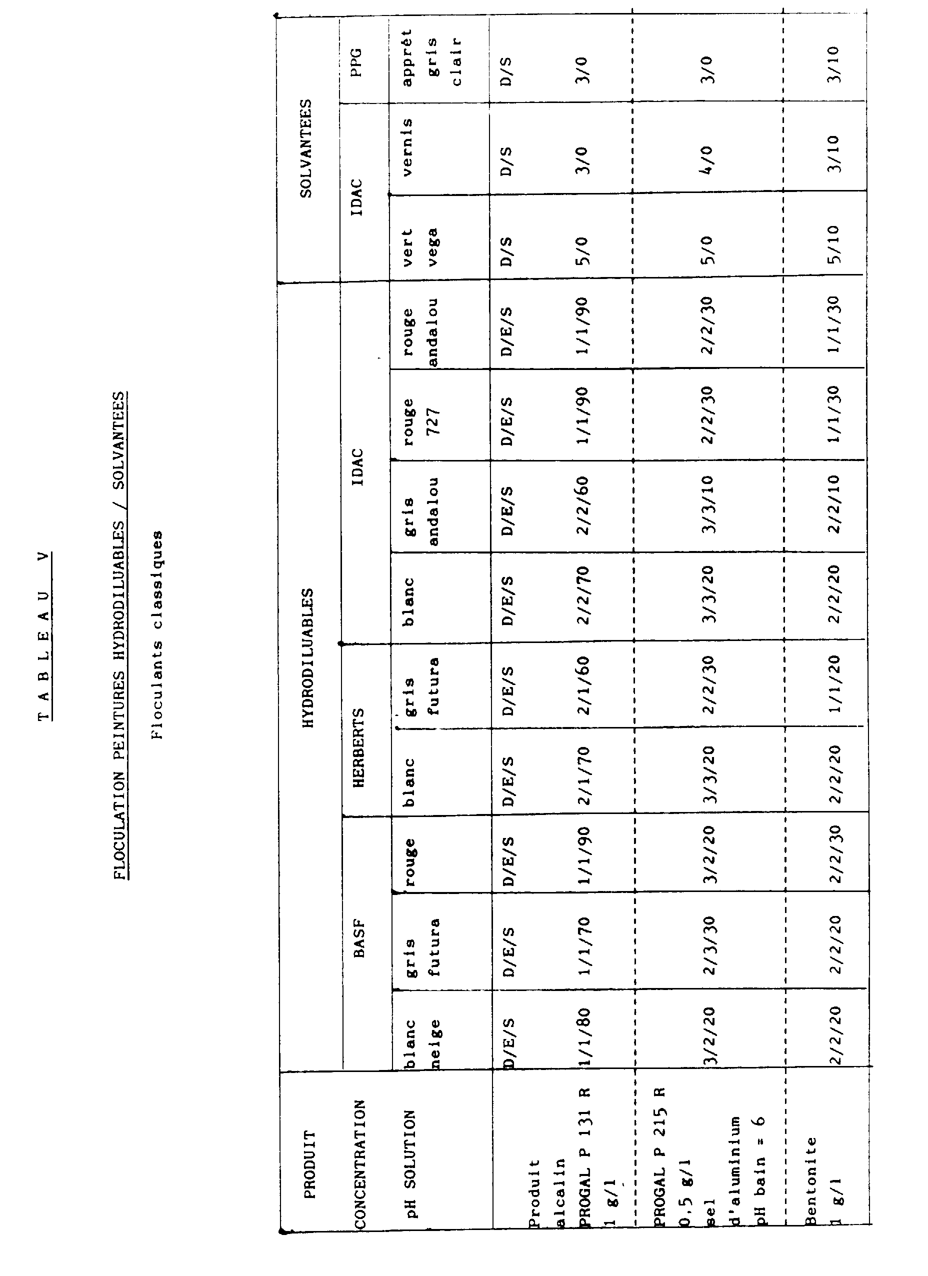

A l'examen des valeurs indiquées pour D, E et S dans les tableaux II à V, il apparaît :
- que les agents de dénaturation conformes à l'invention ne conduisent jamais à une sédimentation des peintures hydrodiluables au contraire des agents de dénaturation selon l'art antérieur,
- que dans le cas de la dénaturation de peintures solvantées, on n'observe pas, en utilisant des compositions selon l'invention, de sédimentation,
- que la dénaturation des peintures hydrodiluables ainsi que la résistance à l'exsudation des pigments sont plus complètes avec les compositions selon l'invention,
- que la dénaturation des peintures solvantées est aussi bonne avec les compositions selon l'invention qu'avec les agents de dénaturation selon l'art antérieur.

Il s'ensuit que les agents de dénaturation conformes à l'invention sont utilisables aussi bien sur peintures solvantées que sur peintures hydrodiluables.

Leur universalité constitue un avantage important.

## Revendications

1. Procédé de dénaturation des peintures hydrodiluables et des peintures solvantées, caractérisé par le fait que l'on traite lesdites peintures par lavage à l'aide d'une phase aqueuse de dénaturation dont le pH est de 4,5 à 7 et préférentiellement de 5 à 6 et qui contient une quantité efficace d'au moins un agent de dénaturation constitué par une molécule aminée de formule 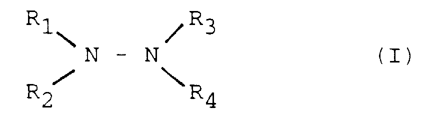 ou de formule: 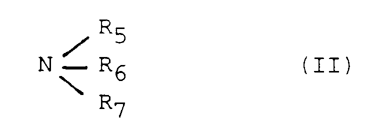 dans laquelle, les substituants R₁ à R₇ qui peuvent être identiques ou différents représentent:
- un atome d'hydrogène,
- un radical de formule -O-Re dans laquelle Re est choisi dans le groupe comprenant l'hydrogène et une chaîne hydrocarbonée aliphatique saturée en C₁ à C₄ étant entendu que les substituants R₅ à R₇ ne sont pas simultanément tous des atomes d'hydrogène,
ou par un hydrate ou encore par un sel d'acide organique ou minéral de la susdite molécule aminée, de préférence un sel d'acide sulfurique, phosphorique ou chlorhydrique.

2. Utilisation comme agents de dénaturation des peintures hydrodiluables et des peintures solvantées d'une molécule aminée de formule 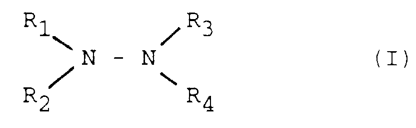 ou de formule: 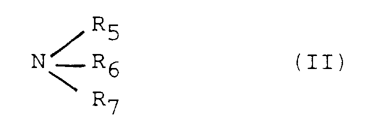 dans laquelle, les substituants R₁ à R₇ qui peuvent être identiques ou différents représentent:
- un atome d'hydrogène,
- un radical de formule -O-Re dans laquelle Re est choisi dans le groupe comprenant l'hydrogène et une chaîne hydrocarbonée aliphatique saturée en C₁ à C₄ étant entendu que les substituants R₅ à R₇ ne sont pas simultanément tous des atomes d'hydrogène,
ou d'un hydrate ou encore d'un sel d'acide organique ou minéral de la susdite molécule aminée, de préférence un sel d'acide sulfurique, phosphorique ou chlorhydrique.

3. Solution de dénaturation des peintures hydrodiluables et des peintures solvantées, caractérisée par le fait qu'elle comprend au moins un agent de dénaturation constitué par une molécule aminée de formule (I) ou (II) ou au moins l'un de ses hydrates ou sels d'acide organique ou minéral en une concentration comprise entre 0,1 et 50 g/l et de préférence entre 1 et 6 g/l, ainsi que
- des agents dénaturants complémentaires choisis dans le groupe comprenant les polyélectrolytes classiques (non ioniques, anioniques, cationiques) et les solutions de sels de métaux trivalents comme l'aluminium et le fer^{III} et/ou
- des agents antimousse choisis dans le groupe comprenant les huiles d'origine minérale, végétale ou animale, les agents tensio-actifs non ioniques lipophiles dont les alcools ou des alkylphénols contenant de l'oxyde de propylène, les agents antimousses siliconés et/ou
- des agents antimicrobiens choisis dans le groupe comprenant les précurseurs du formol, dont les triazines, les aldéhydes dont le glutaraldéhyde, les dérivés de l'isothiazalone dont les produits commercialisés par la Société RÖHM & HAAS sous la dénomination KATHON.

4. Concentré propre à fournir, par dilution avec la quantité nécessaire d'eau, la solution de dénaturation des peintures hydrodiluables et des peintures solvantées selon la revendication 3, caractérisé par le fait qu'il se présente sous la forme d'une solution comportant une proportion de 5 à 50% en poids d'au moins un agent de dénaturation constitué par une molécule aminée de formule (I) ou (II) ou au moins l'un de ses hydrates ou sels d'acide organique ou minéral, ainsi que
- des agents dénaturants complémentaires choisis dans le groupe comprenant les polyélectrolytes classiques (non ioniques, anioniques, cationiques) et les solutions de sels de métaux trivalents comme l'aluminium et le fer^{III} et/ou
- des agents antimousse choisis dans le groupe comprenant les huiles d'origine minérale, végétale ou animale, les agents tensio-actifs non ioniques lipophiles dont les alcools ou des alkylphénols contenant de l'oxyde de propylène, les agents antimousses siliconés et/ou
- des agents antimicrobiens choisis dans le groupe comprenant les précurseurs du formol, dont les triazines, les aldéhydes dont le glutaraldéhyde, les dérivés de l'isothiazalone dont les produits commercialisés par la Société RÖHM & HAAS sous la dénomination KATHON.

## Patentansprüche

1. Verfahren zur Denaturierung von wasserverdünnbaren Farben und Lösungsmittel enthaltenden Farben, dadurch gekennzeichnet, daß man die Farben durch Waschen mit einer wässrigen Denaturierungsphase behandelt, deren pH-Wert von 4,5 bis 7 reicht bevorzugt von 5 bis 6 reicht, und die eine wirksame Menge mindestens eines Denaturierungsmittels, bestehend aus einem Aminmolekül der Formel 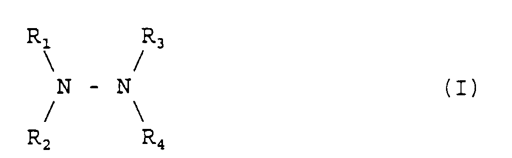 oder der Formel 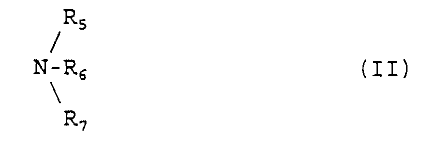 wobei die Substituenten R₁ bis R₇, die gleich oder unterschiedlich sein können:
- ein Wasserstoffatom,
- einen Rest der Formel -O-Re, wobei Re ausgewählt wird aus der Gruppe, umfassend Wasserstoff und eine gesättigte aliphatische C₁ bis C₄ Kohlenwasserstoffkette, darstellen, mit der Maßgabe, daß die Reste R₅ bis R₇ nicht alle gleichzeitig Wasserstoffatome sind,
oder aus einem Hydrat oder auch einem Salz des Aminmoleküls mit einer organischen oder mineralischen Säure, bevorzugt ein Schwefelsäure-, Phosphorsäure- oder Chlorwasserstoffsäuresalz, enthält.

2. Verwendung eines Aminmoleküls der Formel 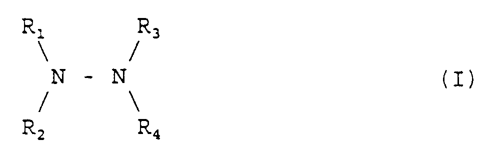 oder der Formel 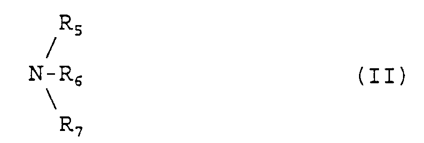 wobei die Substituenten R₁ bis R₇, die gleich oder unterschiedlich sein können:
- ein Wasserstoffatom,
- einen Rest der Formel -O-Re, wobei Re ausgewählt wird aus der Gruppe, umfassend Wasserstoff und eine gesättigte aliphatische C₁ bis C₄ Kohlenwasserstoffkette, darstellen, mit der Maßgabe, daß die Reste R₅ bis R₇ nicht alle gleichzeitig Wasserstoffatome sind,
oder eines Hydrats oder auch eines Salzes des Aminmoleküls mit einer organischen oder mineralischen Säure, bevorzugt eines Schwefelsäure-, Phosphorsäure- oder Chlorwasserstoffsäuresalzes, als Denaturierungsmittel von wasserverdünnbaren Farben und Lösungsmittel enthaltenden Farben.

3. Lösung zur Denaturierung von wasserverdünnbaren Farben und Lösungsmittel enthaltenden Farben, dadurch gekennzeichnet, daß sie mindestens ein Denaturierungsmittel, bestehend aus einem Aminmolekül nach Formel (I) oder (II), oder mindestens eines seiner Hydrate oder Salze mit einer organischen oder mineralischen Säure in einer Konzentration zwischen 0,1 und 50 g/l und bevorzugt zwischen 1 und 6 g/l umfaßt, sowie
- zusätzliche Denaturierungsmittel, ausgewählt aus der Gruppe umfassend die klassischen (nicht-ionischen, anionischen, kationischen) Polyelektrolyten und die Lösungen von Salzen dreiwertiger Metalle, wie Aluminium und Eisen^{III}, und/oder
- Antischaummittel, ausgewählt aus der Gruppe umfassend die Öle mineralischen, pflanzlichen oder tierischen Ursprungs, die oberflächenaktiven nicht-ionischen lipophilen Mittel, darunter die Alkohole oder Propylenoxid enthaltende Alkylphenole, die Silikonantischaummittel, und/oder
- antimikrobielle Mittel, ausgewählt aus der Gruppe umfassend die Formolvorläufer, darunter die Triazine, die Aldehyde, darunter Glutaraldehyd, die Isothiazalonderivate, darunter die von der Gesellschaft RÖHM & HAAS unter der Bezeichnung KATHON kommerziell erhältlichen Produkte.

4. Konzentrat, geeignet zur Herstellung der Lösung zur Denaturierung von wasserverdünnbaren Farben und Lösungsmittel enthaltenden Farben nach Anspruch 3 durch Verdünnen mit der erforderlichen Wassermenge, dadurch gekennzeichnet, daß es in Form einer Lösung vorliegt, welche einen Anteil von 5 bis 50 Gew.-% mindestens eines Denaturierungsmittels, bestehend aus einem Aminmolekül nach Formel (I) oder (II), oder mindestens eines seiner Hydrate oder Salze mit einer organischen oder mineralischen Säure umfaßt, sowie
- zusätzliche Denaturierungsmittel, ausgewählt aus der Gruppe umfassend die klassischen (nicht-ionischen, anionischen, kationischen) Polyelektrolyten und die Lösungen von Salzen dreiwertiger Metalle, wie Aluminium und Eisen^{III}, und/oder
- Antischaummittel, ausgewählt aus der Gruppe umfassend die Öle mineralischen, pflanzlichen oder tierischen Ursprungs, die oberflächenaktiven nicht-ionischen lipophilen Mittel, darunter die Alkohole oder Propylenoxid enthaltende Alkylphenole, die Silikonantischaummittel, und/oder
- antimikrobielle Mittel, ausgewählt aus der Gruppe umfassend die Formolvorläufer, darunter die Triazine, die Aldehyde, darunter Glutaraldehyd, die Isothiazalonderivate, darunter die von der Gesellschaft RÖHM & HAAS unter der Bezeichnung KATHON kommerziell erhältlichen Produkte.

## Claims

1. Process for denaturating water-dilutable paints and solvent-based paints, characterized by the fact that said paints are treated by washing with the assistance of an aqueous denaturation phase whose pH is from 4.5 to 7 and preferably from 5 to 6 and which contains an effective quantity of at least one denaturation agent consisting of an amine molecule of formula 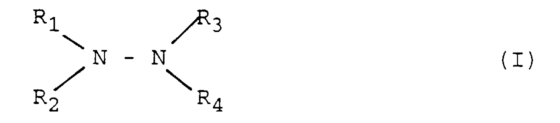 or of formula: 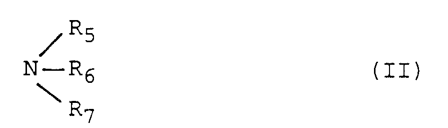 in which the substituents R₁ to R₇, which may be identical or different, represent:
- a hydrogen atom,
- a radical of formula -O-Re in which Re is selected from the group comprising hydrogen and a C₁ to C₄ saturated aliphatic hydrocarbon chain, it being understood that all the substituents R₅ to R₇ are not simultaneously hydrogen atoms,
or of a hydrate or else of an organic or inorganic acid salt of said amine molecule, preferably a salt of sulfuric acid, phosphoric acid or hydrochloric acid.

2. Use as agents for denaturating water-dilutable paints and solvent-based paints of an amine molecule of formula 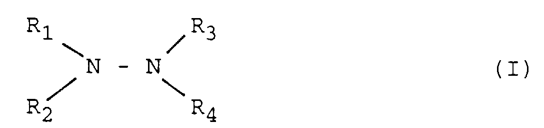 or of formula: 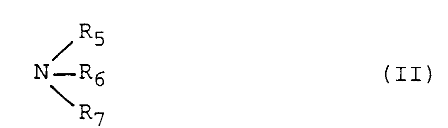 in which the substituents R₁ to R₇, which may be identical or different, represent:
- a hydrogen atom,
- a radical of formula -O-Re in which Re is selected from the group comprising hydrogen and a C₁ to C₄ saturated aliphatic hydrocarbon chain, it being understood that all the substituents R₅ to R₇ are not simultaneously hydrogen atoms,
or of a hydrate or else of an organic or inorganic acid salt of said amine molecule, preferably a salt of sulfuric acid, phosphoric acid or hydrochloric acid.

3. Solution for denaturating water-dilutable paints and solvent-based paints, characterized by the fact that it comprises at least one denaturation agent consisting of an amine molecule of formula (I) or (II) or at least one of its hydrates or organic or inorganic acid salts in a concentration comprised between 0.1 and 50 g/l and preferably between 1 and 6 g/l, as well as
- additional denaturation agents selected from the group comprising the conventional polyelectrolytes (nonionic, anionic, cationic) and solutions of salts of trivalent metals such as aluminum and iron^{III} and/or
- antifoaming agents selected from the group comprising oils of mineral, vegetable or animal origin, lipophilic nonionic surfactants among which propylene oxide containing alcohols or alkylphenols, the silicone-containing antifoaming agents, and/or
- microbicidal agents selected from the group comprising the precursors of formaldehyde among which the triazines, the aldehydes among which glutaraldehyde, the derivatives of isothiazalone among which the products marketed by the Company RÖHM & HAAS under the name KATHON.

4. Concentrate capable of providing, by dilution with the required amount of water, the solution for denaturating water-dilutable paints and solvent-based paints according to claim 3, characterized by the fact that it is in the form of a solution comprising a proportion of 5 to 50% by weight of at least one denaturation agent consisting of an amine molecule of formula (I) or (II) or at least one of its hydrates or organic or inorganic acid salts, as well as
- additional denaturation agents selected from the group comprising the conventional polyelectrolytes (nonionic, anionic, cationic) and solutions of salts of trivalent metals such as aluminum and iron^{III} and/or
- antifoaming agents selected from the group comprising oils of mineral, vegetable or animal origin, lipophilic nonionic surfactants among which propylene oxide containing alcohols or alkylphenols, the silicone-containing antifoaming agents, and/or
- microbicidal agents selected from the group comprising the precursors of formaldehyde among which the triazines, the aldehydes among which glutaraldehyde, the derivatives of isothiazalone among which the products marketed by the Company RÖHM & HAAS under the name KATHON.
